# EUROPEAN PATENT APPLICATION

(11) **EP 1 892 969 A1**
(43) Date of publication of application: **27.02.2008**
(21) Application number: 07253134.6
(22) Date of filing: 10.08.2007
(51) Int. Cl.: H04Q 7/32

(54) **Relay-assisted channel condition measurements for connection setup and maintenance**

(30) Priority: 24.08.2006 US 839906 P; 08.08.2007 US 835470
(71) Applicant: SIEMENS CORPORATE RESEARCH, INC., Princeton, New Jersey 08540 (US)
(72) Inventor: Chindapol, Aik, Princeton, New Jersey 08542 (US); Bae, Junjik, Evanston, Illinois 60202 (US); Marchenko, Vladimir, Plainsboro, New Jersey 08536 (US)
(74) Representative: Clarke, Alison Clare

(57) **Abstract**

A method is provided wherein communication channel conditions are communicated between a relay station and a mobile station to a base station, comprising: transmitting from the mobile station to the relay station information indicating the communication channel conditions between the relay station and the mobile station, such information including pilots with the uplink data message from the relay station to the base station, dedicated ranging codes from the relay station to the base station or contention-based initial ranging codes from the relay station to the base station; instructing, when either the dedicated ranging codes or contention-based initial ranging codes, the relay station by the base station of the dedicated ranging or contention-based initial ranging method used and having a relay station monitored the ranging method; processing the information received by the relay station in the relay station into a channel condition report; and transmitting from the relay station to the base station the channel condition report.

## Description

### CROSS-REFERENCE TO RELATED APPLICATIONS

This application claims priority from U.S. Provisional application Serial Number 60/839,906 filed on August 24, 2006 which is incorporated herein by reference.

### TECHNICAL FIELD

This invention relates generally to wireless communication systems and more particularly to wireless communication systems wherein a source, such as a base station, communicates to a destination, such as a mobile station, through a relay station and vice versa. Still more particularly, the invention relates to methods for providing communication channel conditions between the relay station and a mobile station to a base station.

### BACKGROUND AND SUMMARY

As is known in the art, with IEEE Standard 802.16, IEEE Standard for Local and metropolitan area multi-hop relay systems, intra-cell handover (HO), or the routing within a cell, becomes very important to serve the mobile station (MS) seamlessly. In such system, the base station (BS) makes the routing decision based on the channel condition measurements, (e.g., QoS, fairness, etc.). The channel condition measurements between corresponding stations are especially critical in the routing decision. It is desirable that this be done with minimal intervention from MS to provide seamless service.

Two kinds of HO could be considered in the multi-cell multi-hop relay systems: Inter-cell HO and Intra-cell HO. The inter-cell HO is very complex in nature and requires cooperation between neighboring BSs. The first step of the inter-cell HO is the network topology acquisition by having MS scanned neighboring BSs before making a HO request. Next, the actual HO procedure is carried out. On the other hand, the intra-cell HO of the MS within the coverage of BS and mobile stations (RSs) is reduced to a routing update problem. The BS makes the routing decision and informs all of the RSs within the cell so that each data flow can be routed seamlessly without service interruption, see G. Shen, et al., "Handover Schemes in IEEE 802.16j," Alcatel, IEEE 802.16j-06005r1.

The reliable channel measurement in the multi-hop relay system is very important for the seamless and timely routing. For the channels between BS and MSs and between BS and RSs, the measurement methods described in the standard such as received signal strength indicator (RSSI) and carrier-to-interference-and noise-ratio (CINR) can be used.

More particularly, the inter-cell HO in 802.16e requires the MS to scan neighboring BSs and to report the channel measurement to the serving BS. More specifically, the traditional inter-cell HO procedure involves two steps, see D. Lee, K. Kyamakya, J. Umondi, "Fast Handover Algorithm for IEEE 802.16e Broadband Wireless Access System," International Symposium on Wireless Pervasive Computing (ISWPC), pp. 1-6, Jan., 2006. The first step is the network topology acquisition. The serving BS periodically broadcasts the network topology information using MOB-NBRADV message which includes the channel information of neighboring BSs, and MS synchronizes to the neighboring BSs without listening to the DCD / UCD message. Through this scanning MS selects some candidate BSs for HO. The association to the candidate BSs by sending the initial ranging might follow to obtain more complete PHY / MAC characteristics of the BSs. Once the target BS is selected, the next step is the actual HO process. This HO involves the cell reselection of MS, HO decision & initiation, downlink / uplink (DL- / UL) synchronization, and MS re-authorization / re-registration, etc. Finally, the MS sends MOB HO-IND message to the serving BS and it starts the normal operation with new BS.

In accordance with the invention, a wireless communication system is provided having a base station (BS) communicating with a mobile station (MS). The system provides communication channel conditions between a relay station and the mobile station to the base station wherein the communication channel conditions between the relay station and the mobile station are reported to the base station using a down link (DL) preamble-based channel measurement wherein the relay station sends the preamble and the mobile station reports the measurement of each relay station to the base station.

In accordance with the present invention, a method is provided wherein communication channel conditions between a relay station and a mobile station are reported to a base station, comprising: transmitting from the mobile station information indicating the communication channel conditions between the relay station and the mobile station, such information including either: pilots with an uplink data message from the mobile station; dedicated ranging codes from the mobile station; or contention-based initial ranging codes from the mobile station; instructing, when the dedicated ranging codes are used, the relay station by the base station of dedicated ranging information such as a selected code or location in an uplink subframe; having a relay station monitor the uplink transmission ; processing the information received by the relay station in the relay station into a channel condition report; and transmitting from the relay station to the base station the channel condition report.

Thus, in accordance with the invention this reporting is based on the RS's capability to listen to signals from the MS. The RS listens to either ranging codes or pilots within the data message, and estimates the channel quality.

With such method, the RSs are invisible to MS and use existing mechanisms for the channel measurement such as ranging codes or pilots.

The channel measurement schemes in accordance with the invention are based on the ability of the RS to listen to signals from MS. For the channel measurement with the ranging code, both the dedicated ranging and the contention based initial ranging are possible depending on the capability and complexity of RS.

Thus, the intra-cell HO in accordance with the invention is quite different from the inter-cell HO. The intra-cell HO or the routing within the cell requires the routing decision and the maintenance of the routing; it being assumed that the centralized routing decision based on the channel measurement, QoS, fairness, etc., is made at the BS. Then BS informs all of RS within the cell so that the service to MS continues seamlessly during the intra-cell HO process. The reliable channel measurement, especially, between RS and MS is very important for BS to make the appropriate routing decision. The BS relies on existing methods used in IEEE 802.16 to obtain channel conditions between the BS and mobile stations. Thus, in accordance with the invention, the RS monitors the channel between RS and MS and to conduct measurements on behalf of BS.

The details of one or more embodiments of the invention are set forth in the accompanying drawings and the description below. Other features, objects, and advantages of the invention will be apparent from the description and drawings, and from the claims.

### DESCRIPTION OF DRAWINGS

FIG. 1 is a diagram showing a RS sending the preamble with DL/UL MAP with each mobile station listening and reporting the channel to BS according to scanning neighboring BS process of the inter-cell HO according to one embodiment of the invention; and
FIG. 2 is a diagram showing a RS listening to ranging codes or data messages with pilots and reporting the measurement to the BS according to another embodiment of the invention.
Like reference symbols in the various drawings indicate like elements.

### DETAILED DESCRIPTION

### DL Preamble-based Channel Measurement

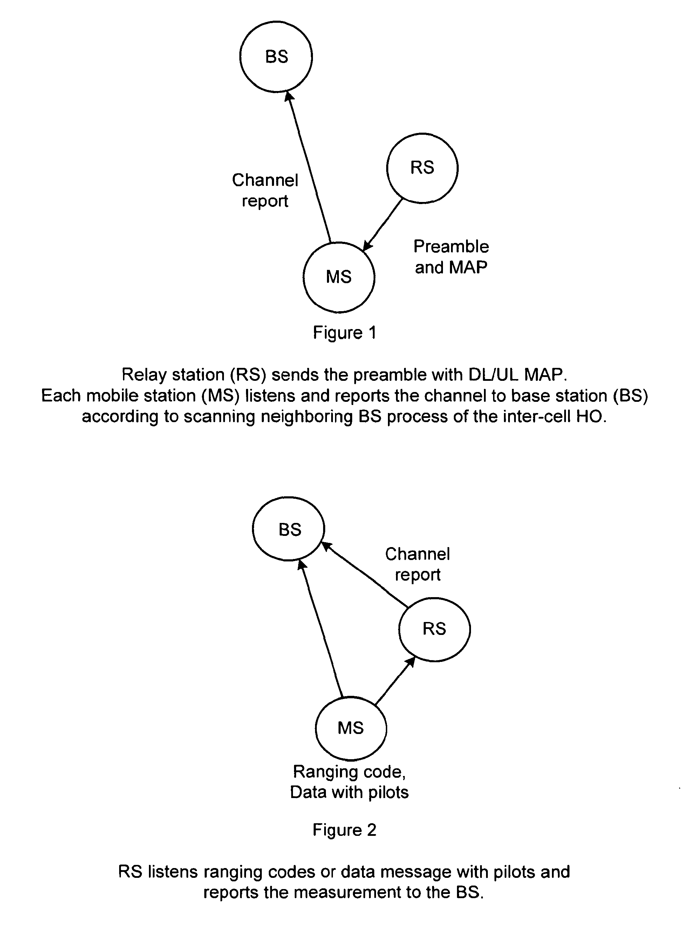

Referring now to FIG. 1, a wireless communication system is shown wherein a source, such as a base station (BS), communicates to a destination, such as a mobile station (MS). Such communication may be done through a relay station (RS). The system provides communication channel conditions between the relay station and the mobile station to the base station. More particularly, communication channel conditions between the relay station and the mobile station are communicated to the base station. Here, in the down link (DL) preamble-based channel measurement, the RSs here only one RS being shown, send the distinct preamble and MS reports the measurement from each of the RSs to BS. The relay might have capability to send the preamble along with the repeated DL- / UL-MAP. Since the MS cannot distinguish the preambles of the RSs from those of the BS, the BS can ask for the report of scanned neighboring RSs as explained in the inter-cell HO procedure. Once the MS scans and chooses the target RS, it reports the measurement results to the BS. This is very similar to the inter-cell HO process and can be implemented easily. However, this requires a lot of overhead since each mobile station has to scan all the RSs within a cell, which takes a lot of time and involves many message exchanges. Thus, there are 3 main steps: transmitting information from a relay station, processing information at the receiving station and transmitting report from the receiving station back to the base station.

Referring now to FIG. 2, a wireless communication system is shown wherein a source, such as a base station (BS), communicates to a destination, such as a mobile station (MS), through a relay station (RS). The system provides communication channel conditions between a relay station and a mobile station to the base station. More particularly, communication channel conditions between the relay station and the mobile station are communicated to the base station, comprising: transmitting from the mobile station information indicating the communication channel conditions between the relay station and the mobile station; having a relay station monitored the uplink transmission; processing the information received by the relay station in the relay station into a channel condition report; and transmitting from the relay station to the base station the channel condition report. With such method, the measurements at the RSs are invisible to MS and use existing mechanisms for the channel measurement such as ranging codes or pilots. The method transmits from the mobile station information indicating the communication channel conditions between the relay station and the mobile station; and relaying the information received by the relay station to the base station.

The channel measurement schemes are based on the ability of the RS to listen to signals from MS. In one embodiment, the RS listens to either the dedicated ranging code or initial ranging code in the initial ranging slot or pilots in the up-link (UL) data message and reports the channel condition to BS. For the channel measurement with the ranging code, both the dedicated ranging and the contention based initial ranging are possible depending on the capability and complexity of RS.

### Pilot-based Channel Measurement in UL transmission

Here, the mobile station transmits to the base station information indicating the communication channel conditions between the relay station and the mobile station, such information including pilots with the uplink data message from the relay station to the base station. That is, the RS listens to pilot and data signals from MS's message and estimates the channel condition (i.e.. quality). The format and location of the pilot relative to that of data are specified in IEEE 802.16. For instance, for the mandatory tile structure in the uplink, pilot sub-carriers are inserted into each data burst in order to constitute the symbol and they are modulated according to their subcarrier location within the OFDMA symbol. (See section 8.4.9.4.3 in IEEE Std 802.16, IEEE Standard for Local and metropolitan area networks, Part 16: Air Interface for Fixed Broadband Wireless Access Systems, 2004 and IEEE Std 802. 16e, IEEE Standard for Local and metropolitan area networks, Part 16: Air Interface for Fixed and Mobile Broadband Wireless Access System, 2005) RSSI and CINR measurement are mandated by the BS in the 802.16, and we apply these mandatory measurements to RS to obtain the channel quality between RS and MS.

### Ranging-based Channel Measurement

As MS enters the network, it performs the initial ranging to synchronize itself to the BS in frequency and time. Also, it may send the periodic ranging code to maintain the synchronization while it is in the network. Here, the system uses dedicated ranging or contention-based initial ranging and reports to the BS. Thus, the ranging code used is either pre-assigned to the mobile station as in dedicated ranging or randomly chosen by the mobile station as in contention-based initial ranging. The method comprises: transmitting from the mobile station information indicating the communication channel conditions between the relay station and the mobile station, such information including either: dedicated ranging codes transmitted from the mobile station; or contention-based initial ranging codes transmitted from the mobile station; instructing, when the dedicated ranging codes are used, the relay station by the base station of dedicated ranging information such as a selected code or location in an uplink subframe; having a relay station monitor the uplink transmission; processing the information received by the relay station in the relay station into a channel condition report; and transmitting from the relay station to the base station the channel condition report.

When the slots and the ranging code are randomly chosen by the MS, RS has to monitor whole ranging slots in the UL-frame and match with all possible ranging codes to estimate the channel quality.

The dedicated ranging can be used and it requires the coordination between BS and RS including the ranging code and ranging slot information. According to 802.16e (section 6.3.22.1.3 in IEEE Std 802. 16e, IEEE Standard for Local and metropolitan area networks, Part 16: Air Interface for Fixed and Mobile Broadband Wireless Access System, 2005), the ranging in the dedicated ranging slot can be performed during the scanning process. During the scanning for the inter-cell HO, MS may do initial ranging optionally with neighboring BSs. When MS requests the association scanning for HO using MOBSCN-REQ message, the serving BS coordinates the association procedure with the requested BSs. Each neighboring BS assigns a unique code number from within the initial ranging codeset and a transmission opportunity within the allocated region, and the serving BS provides the pre-assigned association ranging info via the MOBSCN-RSP message to the MS.

The association procedure described above can be applied to the channel measurement between RS and MS. The serving BS allocates the dedicated slot for MS's dedicated ranging with a unique code and asks each RS to listen to this dedicated ranging. Since the particular code is pre-selected in the dedicated ranging slot, RSs can easily estimate the channel quality between RS and MS by matching the CDMA code, and inform the channel quality to BS. Since many (if not all) RSs can listen to this ranging slot at the same time, significant saving in delay as compared with DL-based measurements can be obtained.

Without explicit coordination between BS and RS, the initial ranging from MS can be overheard by RS. Since the ranging code is not known, RS has to monitor the ranging with the complete ranging codeset. To improve the channel measurement and reduce the complexity of the RS, the dedicated ranging scheme is suggested. In this scenario, MS sends the unique ranging code at the dedicated time slot as instructed by the BS.

The last scheme that we consider is that a relay station listens to the pilot signals embedded in a message coming from a mobile terminal and estimates the channel condition (i.e. quality. For the mandatory tile structure in the uplink, pilot sub-carriers are inserted into each data burst in order to constitute the symbol and they are modulated according to their subcarrier location within the OFDMA symbol. RSSI and CINR measurement can be requested and reported to the base station according to IEEE 802.16.

A number of embodiments of the invention have been described. Nevertheless, it will be understood that various modifications may be made without departing from the spirit and scope of the invention. Accordingly, other embodiments are within the scope of the following claims.

## Claims

1. A method for providing communication channel conditions between a relay station and a mobile station, comprising:
reporting such channel conditions using a down link (DL) preamble-based channel measurement wherein the relay station sends a preamble and the mobile station reports the measurement of the relay station to the base station.

2. A method for providing communication channel conditions between a relay station and a mobile station, comprising:
transmitting from the mobile station information indicating the communication channel conditions between the relay station and the mobile station, such information including either: pilots with an uplink data message from the mobile station; dedicated ranging codes from the mobile station; or contention-based initial ranging codes from the mobile station;
instructing, when the dedicated ranging codes are used, the relay station by the base station of dedicated ranging information such as a selected code or location in an uplink transmission subframe;
having a relay station monitor the uplink transmission;
processing the information received by the relay station in the relay station into a channel condition report; and
transmitting from the relay station to the base station the channel condition report.

3. A method for providing communication channel conditions between a relay station and a mobile station to a base station, comprising:
transmitting from the mobile station information indicating the communication channel conditions between the relay station and the mobile station, such information including pilots with the uplink data message from the mobile station, dedicated ranging codes from the mobile station to the base station or contention-based initial ranging codes from the mobile station;
instructing, when either the dedicated ranging codes or contention-based initial ranging codes, the relay station by the base station of the dedicated ranging or contention-based initial ranging method used and having a relay station monitored the ranging method;
processing the information received by the relay station in the relay station into a channel condition report;
transmitting from the relay station to the base station the channel condition report.

4. A method for providing communication channel conditions between a relay station and a mobile station, comprising:
transmitting from the mobile station information indicating the communication channel conditions between the relay station and the mobile station, such information including pilots with an uplink data message from the mobile station;
indicating to a relay station the location and format of an uplink transmission;
having a relay station monitor the uplink transmission;
processing the information received by the relay station in the relay station into a channel condition report; and
transmitting from the relay station to the base station the channel condition report.

5. A method for providing communication channel conditions between a relay station and a mobile station, comprising:
transmitting from the mobile station information indicating the communication channel conditions between the relay station and the mobile station, such information including dedicated ranging codes from the mobile station;
instructing the relay station by the base station of the dedicated ranging codes used and location in an uplink transmission subframe ;
having a relay station monitor the uplink transmission;
processing the information received by the relay station in the relay station into a channel condition report; and
transmitting from the relay station to the base station the channel condition report.

6. A method for providing communication channel conditions between a relay station and a mobile station, comprising:
transmitting from the mobile station information indicating the communication channel conditions between the relay station and the mobile station, such information including contention-based initial ranging codes from the mobile station;
instructing the relay station by the base station of the contention-based initial ranging method used and having a relay station monitored the ranging method;
having a relay station monitor the uplink transmission;
processing the information received by the relay station in the relay station into a channel condition report; and
transmitting from the relay station to the base station the channel condition report.

7. A method for providing communication channel conditions between a relay station and a mobile station to a base station, comprising:
transmitting from the mobile station information indicating the communication channel conditions between the relay station and the mobile station, such information including pilots with the uplink data message from the mobile station;
processing the information received by the relay station in the relay station into a channel condition report;
transmitting from the relay station to the base station the channel condition report.

8. A method for providing communication channel conditions between a relay station and a mobile station to a base station, comprising:
transmitting from the mobile station information indicating the communication channel conditions between the relay station and the mobile station, such information including dedicated ranging codes from the mobile station;
instructing the relay station by the base station of the dedicated ranging method used and having a relay station monitored the ranging method;
processing the information received by the relay station in the relay station into a channel condition report;
transmitting from the relay station to the base station the channel condition report.

9. A method for providing communication channel conditions between a relay station and a mobile station to a base station, comprising:
transmitting from the mobile station information indicating the communication channel conditions between the relay station and the mobile station, such information including contention-based initial ranging codes from the mobile station;
instructing the relay station by the base station of the contention-based initial ranging method used and having a relay station monitored the ranging method;
processing the information received by the relay station in the relay station into a channel condition report;
transmitting from the relay station to the base station the channel condition report.
